Europäisches Patentamt

European Patent Office

Office européen des brevets

(11) Veröffentlichungsnummer: **0 181 964**
**A1**

## (12) EUROPÄISCHE PATENTANMELDUNG

(21) Anmeldenummer: **84114196.3**

(22) Anmeldetag: **23.11.84**

(51) Int. Cl.⁴: **A 01 B 19/10, A 01 B 39/10**

(43) Veröffentlichungstag der Anmeldung: **28.05.86**
**Patentblatt 86/22**

(84) Benannte Vertragsstaaten: **AT BE CH DE FR GB IT LI LU NL SE**

(71) Anmelder: **Steiner, Walter, Säntisstrasse 52, CH-8311 Brütten (CH)**

(72) Erfinder: **Steiner, Walter, Säntisstrasse 52, CH-8311 Brütten (CH)**

(54) **Vorrichtung zur Auflockerung des Bodens.**

(57) Die Bodenauflockerungs-Vorrichtung (1) besitzt einen Vorrichtungskörper (2), der ein Antriebsorgan (3) trägt, welches gegebenenfalls über ein im Vorrichtungskörper (2) untergebrachtes Getriebe eine Mehrzahl von Auflockerungswerkzeugen (37) zu linear hin- und hergehender oder kreisender Bewegung antreibt. Zweckmäßigerweise sind einzelne der Auflockerungswerkzeuge (37) zu unterschiedlichen Bewegungen angetrieben. Ein einstellbarer Anschlag (32) dient dazu, die Eindringtiefe der Auflockerungswerkzeuge (37) in den Boden vorzuwählen. Die Auflockerungswerkzeuge (37) sind auswechselbar an der Bodenauflockerungs-Vorrichtung (1) angebracht, so daß eine wohldosierte Bearbeitung des Bodens ermöglicht ist.

0181964

## VORRICHTUNG ZUR AUFLOCKERUNG DES BODENS

Die vorliegende Erfindung bezieht sich auf eine Vorrichtung zur Auflockerung des Bodens, insbesondere dessen
oberflächennahen Schichten. Speziell soll mit der Erfindung ein Gerät geschaffen werden, welches für den Freizeit-Gärtner, aber auch für gewerbliche Verwendung geeignet ist und erlaubt, auf einfache, mühelose Weise ein Auflockern der Oberfläche der Erde in Blumen- und Gemüsebeeten und dgl. zwecks besserer Durchatmung des Bodens und
zu dessen Pflege zu erreichen.

Selbst ein mit der Gartenbaukunde nur mässig vertrauter
Laie weiss, dass die Erde von Blumenbeeten, Gemüsebeeten
und dgl. von Zeit zu Zeit aufgelockert werden muss. Diese
Arbeit ist von Hand, z.B. mit einer Harke, recht mühsam zu
bewältigen und erfordert neben beträchtlichem Kraftaufwand
auch verhältnissmässig viel Zeit. Zwar sind motorisch angetriebene Harken mit umlaufenden, schaufelartigen Harkelementen bekannt, mit denen diese Arbeit recht mühelos
erledigt werden kann. Diese bekannten Motorharken sind jedoch ziemlich gross, schwer und teuer und eignen sich in
erster Linie für grössere, zusammenhängende Flächen, die
in der geschilderten Weise bearbeitet werden müssen. Eine

0181964

Verwendung solcher Geräte bei Blumen- oder Gemüsebeeten schliesst sich nicht nur wegen deren Grösse und Gewicht aus, sondern auch, weil der Auflockerungseffekt wegen der umlaufenden Harkorgane für die meisten Anwendungsfälle viel zu stark und nahezu nicht dosierbar ist.

Es ist die Aufgabe der vorliegenden Erfindung, eine Vorrichtung der eingangs erwähnten Art zu schaffen, welche nicht nur einfach und mühelos zu bedienen ist, sondern die auch eine gezielte und dosierte Auflockerung des Bodens, insbesondere der oberflächennahen Bodenschichten bei beengten Platzverhältnissen erlaubt. Das Gerät soll dabei leicht und nicht zu teuer sein, sodass es mit Vorteil von jedem Hobby-Gärtner nutzbringend verwendet werden kann.

Die Erfindung löst diese Aufgabe mit einer Vorrichtung, die einen Vorrichtungskörper umfasst, an welchem eine Handhabe bzw. ein Befestigungsorgan dafür angebracht ist und welcher ein motorisches Antriebsorgan sowie mindestens ein senkrecht vom Vorrichtungskörper abstehendes, mit dem Antriebsorgan bewegungsgekoppeltes und gegenüber dem Vorrichtungskörper beweglich gelagertes Auflockerungswerkzeug trägt, das zu einer Relativbewegung gegenüber dem Vorrichtungskörper antreibbar ist.

Durch die Bewegung des verhältnissmässig massearmen, in den Boden eindringenden Auflockerungswerkzeuges gegenüber

0181964

den um ein Vielfaches massereicheren, übrigen Vorrichtungsteilen, z.B. im Sinne einer Vibration, erfolgt eine gezielte, wohldosierbare Auflockerung des Bodens, ohne dass die Gefahr besteht, dass benachbarte Blumen, Pflanzensetzlinge usw. beschädigt werden könnten.

Bei bestimmten Anwandungsfällen mag es genügen, ein einziges Auflockerungswerkzeug vorzusehen. Im allgemeinen dürfte es aber vorteilhaft sein, eine Mehrzahl davon an der Vorrichtung anzubringen.

Im Sinne einer vielfältigen Verwendungsmöglichkeit des Grundgerätes mag es angezeigt sein, wenn das Auflockerungswerkzeug bzw. die Auflockerungswerkzeuge an einem Tragkörper befestigt ist bzw. sind, der am Vorrichtungskörper auswechselbar aufgenommen ist. Dadurch kann je nach Verwendungszweck, nach Bodenart usw. ein Tragkörper mit einem oder einer Mehrzahl von geeigneten Auflockerungswerkzeugen ausgewählt und am Gerät befestigt werden. Eine andere Möglichkeit besteht darin, den Tragkörper fest an der Vorrichtung anzuordnen und das oder die Auflockerungswerkzeuge lösbar und arretierbar am Tragkörper zu befestigen, damit diese nach Bedarf ausgewechselt werden können.

Eine besonders intensive, gleichzeitig aber wohldosierbare Bodenauflockerung lässt sich mit einer Weiterbildung des erfindungsgemässen Gerätes erreichen, welches eine Mehrzahl von Auflockerungswerkzeugen aufweist, wobei unter Einfluss des Antriebsorgans eine erste Gruppe der Auflockerungswerkzeuge in einer ersten Richtung und eine zweite Gruppe der Auflockerungswerkzeuge in einer zweiten, unterschiedlichen Richtung antreibbar ist. Durch diese gegensinnige Bewegung der Auflockerungswerkzeuge ist ein besonders müheloses Arbeiten bei gleichzeitiger intensiver Feinlockerung des Bodens erreichbar.

Das Auflockerungswerkzeug bzw. die Auflockerungswerkzeuge können zu einer kreisenden Bewegung, zu einer Bewegung entlang einer geschlossenen Kurve oder zu einer linearen Hin- und Herbewegung angetrieben werden, je nach Art und Form der zur Verwendung gelangenden Auflockerungswerkzeugen. Eine Beeinflussung der Intensität der Bodenauflockerung ist auch dadurch gegeben, dass man die Wahl hat, die Auflockerungswerkzeuge der ersten und der zweiten Gruppe zu der gleichen Bewegung, jedoch in unterschiedlichen Richtungen, oder aber zu unterschiedlichen Bewegungen anzutreiben.

Bei einer bevorzugten Ausführungsform der erfindungsgemässen Vorrichtung ist vorgesehen, dass die Tragvorrichtung durch ein plattenartiges Bauteil gebildet ist, von welchem das Auflockerungswerkzeug bzw. die Auflockerungswerkzeuge zumindest annähernd senkrecht zu einer Plattenoberfläche abstehen. Wenn zwei Tragvorrichtungen vorgesehen sind, die Auflockerungswerkzeuge aufweisen und die in der vorher erwähnten Art zwei Gruppen bilden, die zu gegensinniger Bewegung antreibbar sind, mag es vorteilhaft sein, wenn mindestens eines der plattenartigen Bauteile mit zwichen den
Auflockerungswerkzeugen angeordneten Durchbrechungen versehen ist, durch welche die an der anderen Tragvorrichtung
angeordneten Auflockerungswerkzeuge hindurchtreten. Dadurch können die beiden Tragvorrichtungs-Bauteile übereinander angeordnet werden, in der Art eines Sandwich, und
auf unterschiedliche Weise mit dem Antriebsorgan der Vorrichtung gekoppelt sein.

Die Auflockerungswerkzeuge können zweckmässigerweise durch
metallische Zinken gebildet sein, deren zumindest eine
Stirnkante zugeschliffen ist. Wenn die Zinken zudem in
einem gewissen Anstellwinkel zur Tragvorrichtung geneigt
verlaufen, ergibt sich eine besonders wirkunsvolle Bodenauflockerung bei gleichzeitiger Leichtigkeut der Bedienung, indem die geneigten Zinken einen Vortriebseffekt erzeugen.

Schliesslich kann bei einer Weiterbildung der erfindungsgemässen Vorrichtung vorgesehen sein, dass der Vorrichtungskörper mit einem einstellbaren Begrenzungsanschlag
versehen ist, der die Auflockerungswerkzeuge um einen
wahlweise vorwählbaren Betrag übergreift, um die Eindringtiefe derselben in den Boden zu begrenzen. Dies gestattet wiederum eine sehr differenzierte Arbeitsweise, indem je nach Bodenbeschaffenheit die Eindringtiefe der Auflockerungswerkzeuge in die Oberfläche gewählt werden kann, um genau den erwünschten Auflockerungseffekt zu erzielen.

Im folgenden werden Ausführungsbeispiele der erfindungsgemässen Vorrichtung, unter Bezugnahme auf die beiliegenden Zeichnungen, näher erläutert. In den Zeichnungen zeigen:

Fig. 1     eine schematische, perspektivische Gesamtansicht eines ersten Ausführungsbeispiels der erfindungsgemässen Vorrichtung,

Fig. 2     eine gegenüber Fig.1 vergrösserte, schematische Ansicht eines Tragkörpers mit Auflockerungswerkzeugen von unten,

Fig. 3     einen Schnitt durch den Tragkörper gemäss Fig. 2 entlang der Linie III-III, in einem nochmals etwas vergrösserten Massstab,

Fig. 4     eine schematische, perspektivische Ansicht einer Anordnung mit zwei Tragplatten, die je mit einer Mehrzahl von Auflockerungswerkzeugen versehen sind,

Fig. 5a-c  drei Beispiele von Bewegungsdiagrammen der Auflockerungswerkzeuge,

Fig. 6a+b    eine teilgeschnittene Ansicht von unten bzw.
             eine Seitenansicht eines weiteren Ausführungs-
             beispiels von Auflockerungswerkzeuge aufneh-
             menden Tragorganen, und

Fig. 7       eine perspektivische, schematische Teil-Ansicht eines weiteren Ausführungsbeispiels der
             Vorrichtung.

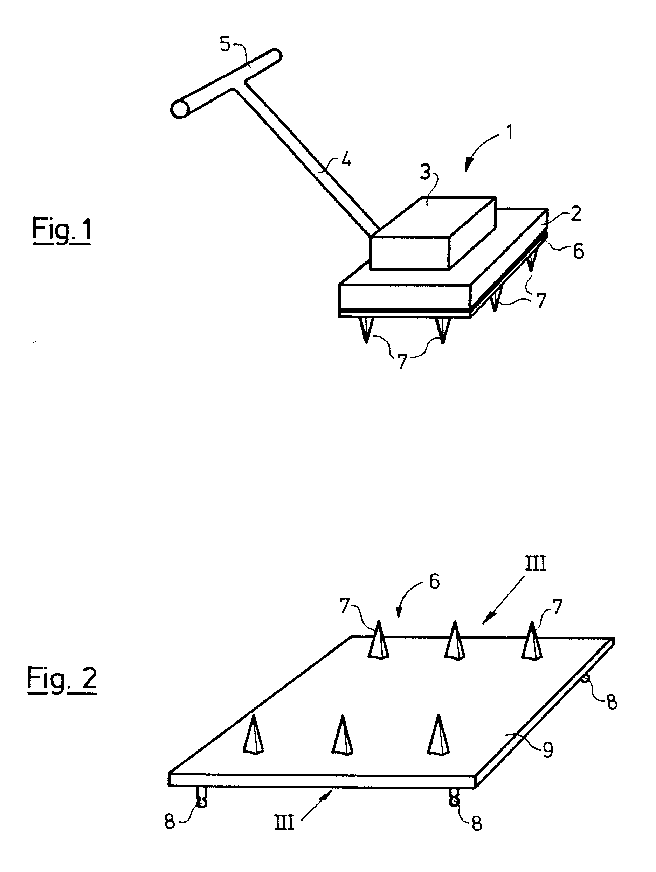

In der Fig. 1 ist eine generell mit 1 bezeichnete Bodenauflockerungs-Vorrichtung in einer schematischen, perspektivischen Gesamtansicht zu sehen. Diese Vorrichtung umfasst im wesentlichen einen Vorrichtungskörper 2, welcher
ein Antriebsorgan 3 trägt und an welchem eine Handhabe,
z.B. ein an einer Stange 4 endseitig angebrachter Handgriff 5 befestigt ist. Es versteht sich, dass diese Handhabe jede andere, gewünschte Form besitzen kann, insbesondere auch lediglich die Form eines (nicht dargestellten)
Koppelungsorganes zur wahlweisen Befestigung verschiedener
Handgriffe oder zur Befestigung eines Schleppmittels;
letzteres ist insbesondere bei grösseren Vorrichtungen der
hier zur Rede stehenden Art von Nutzen, wenn die Bodenauflockerungs-Vorrichtung 1 von einem Antriebsfahrzeug gezogen wird.

Im weiteren nimmt der Vorrichtungskörper ein Tragorgan 6
auf, welches im Beispielsfall plattenartige Gestalt be-

0181964

sitzt und welches mit einer Mehrzahl von Auflockerungswerkzeugen 7 versehen ist. Das Tragorgan 6 ist vorzugsweise lösbar am Vorrichtungskörper 2 befestigt; zu diesem
Zwecke kann es, wie aus Fig. 2 ersichtlich ist, Verankerungszapfen 8 aufweisen, welche in geeignete, korrespondierend ausgebildete Aufnahmen (nicht dargestellt) innerhalb
des Vorrichtungskörpers 2 eingreifen.

Der Vorrichtungskörper 2 beinhaltet Getriebeorgane (nicht
dargestellt), die die Koppelung zwischen Antriebsorgan 3
und Tragorgan 6 herstellen und die letzteres zu einer Relativbewegung gegenüber dem Vorrichtungskörper 2 befähigen, wie es im folgenden noch erläutert werden wird. Die
Ausbildung dieser Getriebeorgane dürfte dem mit der Materie vertrauten Fachmann geläufig sein und braucht an dieser Stelle nicht weiter erläutert zu werden.

In der Fig. 2 ist ein Beispiel eines generell mit 6 bezeichneten Tragorganes in einer schematischen, perspektivischen Darstellung von unten her zu sehen. Es weist eine
ebene Platte 9 auf, welche vorzugsweise aus korrosionsresistentem Metall wie z.B. Chromstahl, Aluminium oder dgl.
besteht und welche an ihrer Oberseite, in der Darstellung
gemäss Fig. 2 unten, mit den schon erwähnten Verankerungszapfen 8 versehen sit. Die gegenüberliegende Seite der
Platte 9 ist mit einer Mehrzahl von Auflockerungswerkzeugen 7 versehen, die über die Oberfläche der Platte 9 verteilt angeordnet sind und im wesentlichen senkrecht davon
abstehen.

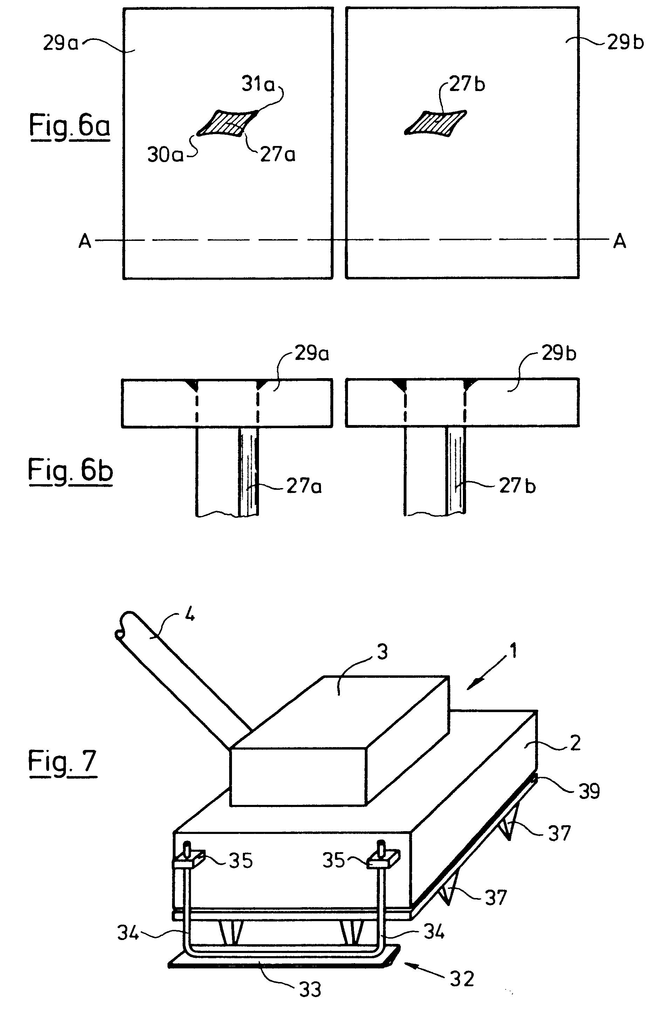

Im Beispielsfall sind die Auflockerungswerkzeuge 7 als
spitze, kegelförmige Zinken dargestellt; sie können jedoch
auch jede andere beliebige Form haben, wie es im folgenden
noch im Zusammenhang mit den Figuren 6a und 6b beispielshaft diskutiert wird. Während in Fig. 2 sechs solcher Auflockerungswerkzeuge 7 dargestellt sind, ist es natürlich
ohne weiteres möglich, je nach Anwendungsfall der Bodenauflockerungs-Vorrichtung 1 mehr oder weniger davon vorzusehen.

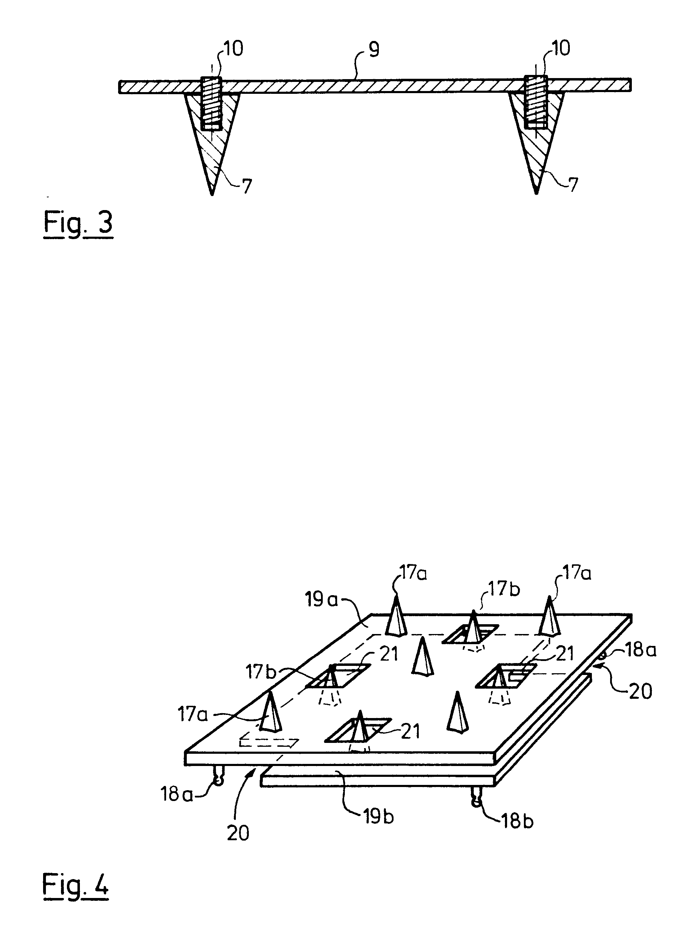

Aus der Schnittdarstellung gemäss Fig. 3 ist ersichtlilch,
dass die Platte 9 des Tragorganes 6 mit einer Anzahl von
darin fest verankerten, über die untere Oberfläche vorstehenden Gewindezapfen 10 versehen ist, auf welche die Auflockerungswerkzeuge 7 aufgeschraubt werden. Damit ist die
Möglichkeit gegeben, einzelne oder alle der Auflockerungswerkzeuge 7 auszuwechseln oder gegebenenfalls nur einzelne
der Gewindezapfen 10 mit solchen Auflockerungswerkzeugen 7
zu versehen. Insbesondere ist es auch möglich, verschiedene Gewindezapfen 10 mit unterschiedlich gestalteten Auflockerungswerkzeugen 7 zu versehen, so dass sich insgesamt
eine ungemein breite Verwendungsmöglichkeit der erfindungsgemässen Bodenauflockerungs-Vorrichtung 1 ergibt.

Zur besonders intensiven Bodenauflockerung eignet sich eine Anordnung, wie sie in Figur 4 dargestellt ist. Hier sind zwei Platten 19a und 19b vorgesehen, welche je mit senkrecht von einer Plattenoberfläche abstehenden Auflockerungswerkzeugen 17a und 17b versehen sind. Wiederum trägt jede der beiden Platten 19a und 19b Verankerungszapfen 18a und 18b zur Befestigung derselben am Vorrichtungskörper 2. Die in Figur 4 unten liegende Platten 19b ist dabei mit eckenseitig angeordneten Ausnehmungen 20 versehen, die einen Durchtritt der Verankerungszapfen 18a der Platte 19a gestatten.

In der Darstellung gemäss Fig. 4 sind die beiden Platten 19a und 19b in gewissem Abstand zueinander gezeichnet; dies dient nur zur Verdeutlichung, weil in der Praxis, d.h. bei am Vorrichtungskörper 2 montierten Platten, diese aufeinanderliegen.

Die Platte 19a ist mit Oeffnungen 21 versehen, durch welche die Auflockerungswerkzeuge 17b der Platte 19b hindurchtreten. Es empfiehlt sich dabei, die Anordnung der Auflockerungswerkzeuge 17a der in Fig. 4 oberen Platte 19a gegenüber den Auflockerungswerkzeugen 17b der unteren Platte 19b versetzt anzuordnen. Auch können die an der Platte 19b angebrachten Auflockerungswerkzeuge 17b um die Dicke der Platte 19a länger ausgeführt sein. Jedenfalls ermöglicht diese Anordnung, die Platten 19a und 19b mittels des Antriebsorganes 3 und unter Zwischenschaltung eines geeigneten Getriebes zu unterschiedlichen Bewegungen anzutreiben, die eine besonders feine, wohl dosierbare Bodenauflockerung gestatten.

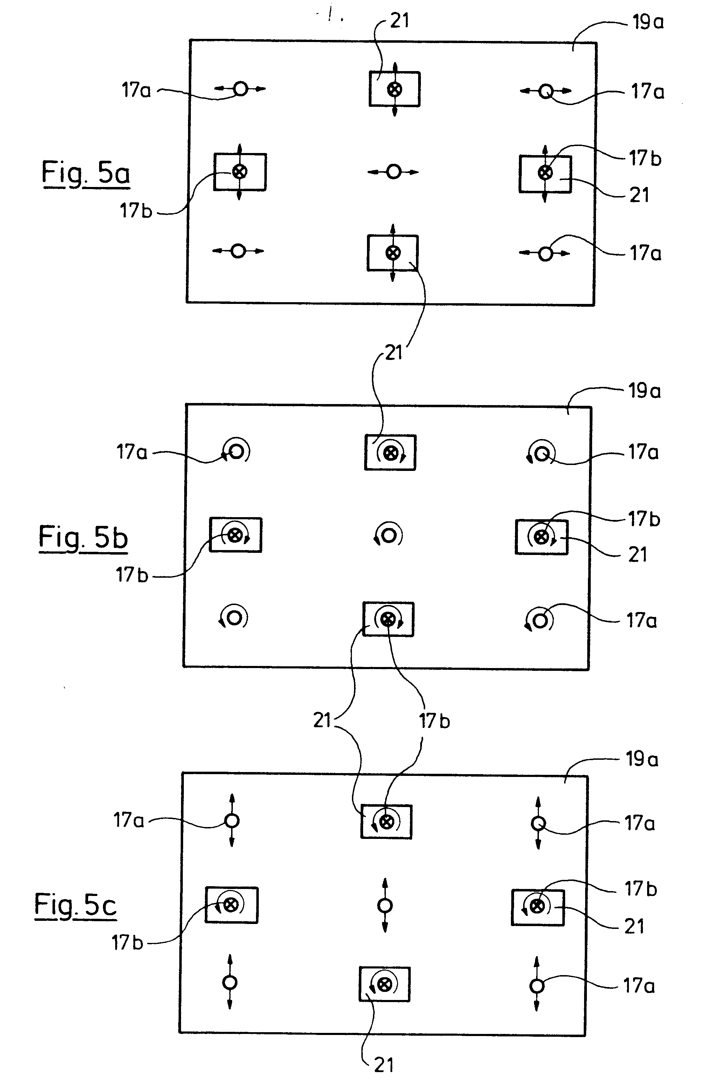

In den Fig. 5a bis 5c sind beispielsweise drei verschiedene Bewegungsdiagramme schematisch dargestellt. Sie beziehen sich auf eine Ansicht der Platten 19a bzw. 19b von unten, wobei die Auflockerungswerkzeuge 17a bzw. 17b als Kreise angedeutet sind. Die Platte 19b ist dabei verdeckt. Aus der Figur 5a ist zu erkennen, dass die an der Platte 19a befestigten Auflockerungswerkzeuge 17a zu einer durch die jeweils zugeordneten Pfeile angedeuteten, linearen Hin- und Herbewegung in einer X-Richtung angetrieben sind, währenddem die an der dahinterliegenden Platte 19b befestigten Auflockerungswerkzeuge 17b zu einer linearen Hin- und Herbewegung gemäss den zugeordneten Pfeilen in Y-Richtung angetrieben sind. Der Antrieb erfolgt dabei zweckmässigerweise durch ein Antriebsorgan 3 (in den Figuren 5a bis 5c nicht dargestellt), welches zwei senkrecht zueinander angeordnete, doppelt wirkende Hubmagnetantriebe umfasst. Der eine dieser Antriebe ist dabei mit der Platte 19a, der andere hingegen mit der Platte 19b bewegungsgekoppelt.

In der Figur 5b werden die der Platte 19a zugeordneten Auflockerungswerkzeuge 17a zu einer kreisenden Bewegung im Gegenuhrzeigersinn angetrieben, währenddem die der Platte
19b zugeordneten Auflockerungswerkzeuge 17b ebenfalls zu
einer kreisenden Bewegung, jedoch im Uhrzeigersinn angetrieben sind. In diesem Fall kann das Antriebsorgan 3 z.B.
ein Elektromotor sein, welcher über ein zweckentsprechend
ausgebildetes Getriebe die Platten 19a und 19b gegensinnig
in Bewegung versetzt.

In der Figur 5c schliesslich ist als drittes Beispiel eine
kombinationsbewegung angedeutet; währenddem sich die der
Platte 19a zugeordneten Auflockerungswerkzeuge 17a in
Y-Richtung hin- und herbewegen, vollführen die der Platte
19b zugeordneten Auflockerungswerkzeuge 17b eine Rotationsbewegung im Gegenuhrzeigersinn, wie es durch die zugeordneten Pfeile angedeutet ist. Zum Antrieb kann entweder ein Elektromotor mit einem Getriebe vorgesehen sein,
welches den Platten 19a bzw. 19b sowohl eine Rotations- -
als auch eine lineare Bewegung zu erteilen vermag, oder es
kann ein rotierender Elektromotor zum Antrieb der Platten
19b sowie ein doppelt wirkender Hubmagnet zum Antrieb der
Platte 19b vorgesehen sein.

Durch die ungleichen Bewegungen der beiden Gruppen von
Auflockerungswerkzeugen 17a bzw. 17b lässt sich eine aussergewöhnlich feine und wirkungsvolle Auflockerung des Bodens erreichen. Es versteht sich von selbst, dass die Wahl
der Antriebsart bzw. der Bewegungsrichtung nicht nur von der Bodenbeschaffenheit, sondern auch von der Formgebung der Auflockerungswerkzeuge abhängt. Die Figuren 5a bis 5c zeigen nur drei Beispiele; zahlreiche andere Bewegungskombinatione sind im Rahmen der Erfindung möglich.

In den Figuren 6a und 6b ist ein weiteres Ausführungsbeispiel gezeigt. Hier sind zwei nebeneinander angeordnete Platten 29a und 29b vorgesehen, welche je ein Auflockerungswerkzeug 27a und 27b tragen. Beide Platten 29a und 29b sind mit dem (nicht gezeigten) Antriebsorgan 3 gekoppelt, sei es, dass dieses aus zwei unabhängigen Antriebseinheiten für je eine der Platten besteht, sei es, dass die beiden Platten 29a und 29b über ein entsprechend ausgestaltetes Zwischengetriebe mittels eines einzigen Antriebsorganes 3 zu unterschiedlichen Bewegungen angetrieben sind.

Im Beispiel gemäss Figuren 6a und 6b besitzen die Auflockerungswerkzeuge 27a und 27b messerartige Form, indem deren Kanten 30a, 31a bzw. 30b, 31b zugeschliffen sind. Insbesondere bei harten, stark verdichteten Böden kann sich eine solche Anordnung bewähren. Ein weiterer Effekt ist darin zu sehen, dass die Auflockerungswerkzeuge 27a und 27b gegenüber einer Vorschubrichtung A-A der Bodenauflockerungs-Vorrichtung 1 etwas angestellt sind, so dass sich eine die Bedienung der Vorrichtung erleichternder Vorschubwirkung ergibt.

In der Figur 7 ist schliesslich ein weiteres Ausführungsbeispiel der erfindungsgemässen Bodenauflockerungs-Vorrichtung 1 zu sehen, welche im Prinzip gleich aufgebaut
ist wie die vorstehend beschriebenen Ausführungsbeispiele,
die jedoch mit einem generell mit 32 bezeichneten Tiefenanschlag ausgerüstet ist. Im Beispielsfalle besitzt dieser
eine Anschlagkufe 33, welche die Auflockerungswerkzeuge 37
mehr oder weniger übergreift und welche durch zwei Stützen
34 am Vorrichtungskörper 2 gehalten ist. Eine entsprechend
ausgebildete Anschlagvorrichtung 32 befindet sich an der
gegenüberliegenden Seite des Vorrichtungskörpers 2. Die
beiden Stützen 34 sind in Verankerungen 35 verschiebbar
und arretierbar gehalten. Durch Lösen der Arretierung und
Höhenverstellung der Anschlagkuven 33 ist es somit möglich, die Eindringtiefe der Auflockerungswerkzeuge 37 im
Boden vorzuwählen, da die unteren Flächen der Anschlagkufen 33 auf der Oberfläche des Bodens aufliegen und somit
die Eindringtiefe begrenzen.

Im Rahmen der Erfindung sind verschiedene Variationsmöglichkeiten gegeben sind. Als Antriebsmotor wird bzw. werden normalerweise ein netzbetriebener Elektromtor und/oder
netzbetriebene Hubmagnete Verwendung finden. Insbesondere
für kleinere Ausführungen der Bodenauflockerungs-Vorrichtung 1 bietet es sich aber auch an, durch eine Batterie
bzw. einen Akkumulator gespeiste Antriebsorgane zu verwenden. Bei Grossausführungen der Bodenauflockerungs-Vorrichtung 1, z.B. in der Landwirtschaft, ist es auch denkbar,
als Antriebsorgan einen Verbrennungsmotor zu verwenden.

**P A T E N T A N S P R U E C H E**

1. Vorrichtung zur Auflockerung des Bodens, gekennzeichnet durch einen Vorrichtungskörper (2), an welchem eine Handhabe (4, 5) bzw. ein Befestigungsorgan dafür angebracht ist und welcher ein motorisches Antriebsorgan (3) sowie mindestens ein senkrecht vom Vorrichtungskörper (2) abstehendes, mit dem Antriebsorgan (3) bewegungsgekoppeltes und gegenüber dem Vorrichtungskörper beweglich gelagertes Auflockerungswerkzeug (7; 17a,17b;27a,27b;37) trägt, das zu einer Relativbewegung gegenüber dem Vorrichtungskörper (2) antreibbar ist.

2. Vorrichtung nach Anspruch 1, dadurch gekennzeichnet, dass eine Mehrzahl von Auflockerungswerkzeugen (7;17a,17b; 37) vorgesehen ist.

3. Vorrichtung nach Anspruch 1 oder 2, dadurch gekennzeichnet, dass das Auflockerungswerkzeug (27a,27b) an einem Tragkörper (29a,29b) befestigt ist bzw. die Auflockerungswerkzeuge (7;17a,17b;37) an einem oder an mehreren Tragkörpern (9;19a,19b;39) befestigt sind, der bzw. die am Vorrichtungskörper (2) auswechselbar aufgenommen ist bzw. sind.

4. Vorrichtung nach Anspruch 3, dadurch gekennzeichnet, dass das Auflockerungswerkzeug (27a,27b) bzw. die Auflockerungswerkzeuge (7;17a,17b;37) am Tragkörper (29a,29b)
bzw. an den Tragkörpern (9;19a,19b;39) unbeweglich befestigt ist bzw. sind, und dass der bzw. die Tragkörper
gegenüber dem Vorrichtungskörper (2) beweglich gelagert
und mit dem Antriebsorgan (3) koppelbar ist bzw. sind.

5. Vorrichtung nach Anspruch 4, dadurch gekennzeichnet,
dass das Auflockerungswerkzeug (27a,27b) bzw. die Auflokkerungswerkzeuge (7;17a,17b;37) auswechselbar am Tragkörper (9;19a,19b;29a,29b;39) befestigt ist bzw. sind.

6. Vorrichtung nach einem der vorangehenden Ansprüche, mit
einer Mehrzahl von Auflockerungswerkzeugen, dadurch gekennzeichnet, dass unter Einfluss des Antriebsorgans (3)
eine erste Gruppe der Auflockerungswerkzeuge (17a) in einer ersten Richtung (X) und eine zweite Gruppe der Auflockerungswerkzeuge (17b) in einer zweiten, unterschiedlichen Richtung (Y) antreibbar ist.

7. Vorrichtung nach einem der vorangehenden Ansprüche, dadurch gekennzeichnet, dass das Auflockerungswerkzeug (27a-
,27b) bzw. die Auflockerungswerkzeuge (7;17a,17b;37) zu
einer kreisenden Bewegung, zu einer Bewegung entlang einer
geschlossenen Kurve oder zu einer linearen Hin- und Herbewegung antreibbar sind.

8. Vorrichtung nach den Ansprüchen 6 und 7, dadurch gekennzeichnet, dass die Auflockerungswerkzeuge der ersten
Gruppe (17a) und die Auflockerungswerkzeuge der zweiten
Gruppe (17b) zu der gleichen Bewegung, jedoch in unterschiedlichen Richtungen angetrieben sind.

9. Vorrichtung nach den Ansprüchen 6 und 7, dadurch gekennzeichnet, dass die Auflockerungswerkzeuge der ersten
und der zweiten Gruppe (17a bzw. 17b) zu unterschiedlichen
Bewegungen angetrieben sind.

10. Vorrichtung nach einem der vorangehenden Ansprüche,
dadurch gekennzeichnet, dass die Tragvorrichtung durch ein
plattenartiges Bauteil (9;19a,19b;29a,29b;39) gebildet
ist, von welchem das Auflockerungswerkzeug (27a,27b) bzw.
die Auflockerungswerkzeuge (7;17a,17b;37) zumindest annähernd senkrecht zu der einen Plattenoberfläche abstehen.

11. Vorrichtung nach Anspruch 10, mit zwei Tragvorrichtungen (19a,19b), die Auflockerungswerkzeuge (17a,17b) aufweisen, dadurch gekennzeichnet, dass mindestens eines der
plattenartigen Bauteile (19a) mit zwischen den Auflockerungswerkzeugen angeordneten Durchbrechungen (21) versehen
ist, durch welche die an der anderen Tragvorrichtung (19b)
angeordneten Auflockerungswerkzeuge hindurchtreten, wenn
die beiden Tragvorrichtungs-Bauteile übereinander angeordnet sind.

12. Vorrichtung nach einem der vorangehenden Ansprüche, dadurch gekennzeichnet, dass das Antriebsorgan (3) durch einen Elektromotor, durch einen Verbrennungsmotor, durch einen oder mehrere Elektromagnete oder durch pneumatische bzw. hydraulische Antriebselemente gebildet ist.

13. Vorrichtung nach einem der vorangehenden Ansprüche, dadurch gekennzeichnet, dass die Auflockerungswerkzeuge (27a,27b) durch metallische Zinken gebildet sind, deren zumindest eine Stirnkante (30a,31,a bzw. 30b, 31b) zugeschliffen ist.

14. Vorrichtung nach Anspruch 13, dadurch gekennzeichnet, dass die Zinken in einem gewissen Anstellwinkel zur Tragvorrichtung (29a,29b) verdreht verlaufen.

15. Vorrichtung nach einem der vorangehenden Ansprüche, dadurch gekennzeichnet, dass der Vorrichtungskörper (2) mit einem einstellbaren Begrenzungsanschlag (32) versehen ist, der die Auflockerungswerkzeuge (37) um einen wahlweise vorwählbaren Betrag übergreift, um die Eindringtiefe derselben in den Boden zu begrenzen.

1/4

**Fig. 1**

**Fig. 2**

0181964

Fig. 3

Fig. 4

0181964

Fig. 5a

Fig. 5b

Fig. 5c

0181964

Fig. 6a

29a    31a
30a    27a

27b
29b

A —————————————————— A

Fig. 6b

29a                          29b
27a                          27b

Fig. 7

4
3        1
2
39
37
35    35
37
34        34
33    32

0181964

Europäisches
Patentamt

**EUROPÄISCHER RECHERCHENBERICHT**

Nummer der Anmeldung

EP 84 11 4196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 532 574 (CUINIER) <br><br> * Insgesamt * | 1-5,7, 10,12, 13,15 | A 01 B 19/10 <br> A 01 B 39/10 |
| | --- | | |
| X | FR-A-2 240 676 (THE BLACK AND DECKER MANUFACTURING CO.) <br> * Insgesamt * | 1-5 | |
| A | | 6-8,10 ,12 | |
| | --- | | |
| X | US-A-2 774 292 (HARTMAN) <br><br> * Insgesamt * | 1-5,7, 10,12- 14 | |
| | --- | | RECHERCHIERTE SACHGEBIETE (Int. Cl.4) |
| X | US-A-2 897 902 (EMMONS) <br><br> * Insgesamt * | 1,2,4- 7,10, 12 | A 01 B |
| | --- | | |
| A | GB-A-1 183 191 (SHARMAN) <br><br> * Insgesamt * | 1,2,4, 5,8,12 ,13 | |
| | --- | | |
| A | DE-C- 859 542 (VOGG) <br><br> * Insgesamt * | 1,2,4- 7,10- 12 | |
| | --- -/- | | |

Der vorliegende Recherchenbericht wurde für alle Patentansprüche erstellt.

| Recherchenort <br> DEN HAAG | Abschlußdatum der Recherche <br> 05-03-1985 | Prüfer <br> VERDOODT S.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

# Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-B-1 291 158 (AMAZONEN-WERKE H. DREYER) * Insgesamt * | 9 | |
| A | US-A-3 756 324 (BILLS) | | |
| A | DE-B-1 022 404 (HOWALDT) | | |
| A | DE-B-1 297 372 (SCHNEIDER) | | |
| A | US-A-3 747 687 (BODINE) | | |
| A | DE-A-2 628 927 (JENSEN) | | RECHERCHIERTE SACHGEBIETE (Int. Cl.4) |
| A | BE-A- 761 933 (SUBEM) | | |

Der vorliegende Recherchenbericht wurde für alle Patentansprüche erstellt.

| Recherchenort DEN HAAG | Abschlußdatum der Recherche 05-03-1985 | Prüfer VERDOODT S.J.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82